# EUROPEAN PATENT APPLICATION

(11) **EP 3 627 670 A1**
(43) Date of publication of application: **25.03.2020**
(21) Application number: 19188118.4
(22) Date of filing: 24.07.2019
(51) Int. Cl.: H02K 9/22, H02K 16/00, H02K 9/20

(54) **ELECTRIC MOTOR SYSTEM**

(30) Priority: 19.09.2018 JP 2018175054
(71) Applicant: TOYOTA JIDOSHA KABUSHIKI KAISHA, Toyota-Shi, Aichi-Ken 471-8571 (JP)
(72) Inventor: HATTORI, Hiroyuki, Aichi-ken, 471-8571 (JP)
(74) Representative: D Young & Co LLP

(57) **Abstract**

An electric motor system (101) includes a first electric motor (10) including a first rotor (11), a first stator (12), and a first coil (13) provided in the first stator (12), a second electric motor (20) including a second rotor (21), a second stator (22) and a second coil (23) provided in the second stator (22) and spaced apart from the first electric motor (10), and a heat conduction member (31) disposed so as to extend between the first coil (13) of the first electric motor (10) and the second coil (23) of the second electric motor (20).

## Description

### BACKGROUND OF THE INVENTION

### 1. Field of the Invention

The invention relates to an electric motor system.

### 2. Description of Related Art

In the related art, an electric motor system provided with a plurality of electric motors is known and is mounted on, for example, a hybrid vehicle. Japanese Unexamined Patent Application Publication No. 2011-225134 (JP 2011-225134 A) discloses a system for efficiently cooling two motor generators as electric motors in a hybrid vehicle equipped with the two motor generators.

### SUMMARY OF THE INVENTION

In an electric motor system provided with a plurality of electric motors, a difference in heat generation amount may occur depending on a difference in load, a use frequency and the like of each electric motor. When such a difference in heat generation amount occurs, a temperature difference may occur between the electric motors.

However, a large temperature difference between the electric motors is usually undesirable. For example, as for a cooling system for cooling a plurality of electric motors, it is necessary to design the cooling system in conformity with the electric motor having a higher temperature. Therefore, when the temperature difference is large, the design of the cooling system is subject to constraints and loads depending on the temperature difference. For example, when the cooling system includes a water pump or a radiator equipped with a fan, the water pump and the fan need to be designed in conformity with the electric motor that is likely to have a high temperature.

The invention provides an electric motor system capable of reducing a temperature difference between electric motors.

An aspect of the invention relates to an electric motor system including a first electric motor including a first rotor, a first stator and a first coil provided in the first stator; a second electric motor including a second rotor, a second stator and a second coil provided in the second stator, the second electric motor spaced apart from the first electric motor; and a heat conduction member disposed so as to extend between the first coil of the first electric motor and the second coil of the second electric motor.

According to the aspect of the invention, heat exchange can be performed between the first electric motor and the second electric motor by the heat conduction member disposed so as to extend between the first coil of the first electric motor and the second coil of the second electric motor disposed apart from each other. As a result, it is possible to reduce the temperature difference between the electric motors.

In the aforementioned aspect, the heat conduction member may be in contact with a coil end of the first coil and a coil end of the second coil. Thus, the heat conduction member may be simplified in configuration and can be disposed so as to extend between the first coil and the second coil.

In the aforementioned aspect, the first electric motor and the second electric motor may be arranged in parallel, and the heat conduction member may be in contact with the radial side surface of the coil end of at least one of the first coil and the second coil. Thus, it is possible to suppress an increase in axial dimension of the electric motor system as a whole.

In the aforementioned aspect, the first electric motor and the second electric motor may be arranged in parallel, and the heat conduction member may be in contact with the axial end surface of the coil end of at least one of the first coil and the second coil. Thus, heat exchange may be performed between the first coil and the second coil.

In the aforementioned aspect, the first electric motor and the second electric motor may be arranged in series, and the heat conduction member may be in contact with the radial side surface of the coil end of at least one of the first coil and the second coil. Thus, it is possible to suppress an increase in axial dimension of the electric motor system as a whole.

In the aforementioned aspect, the first electric motor and the second electric motor may be arranged in series, and the heat conduction member may be in contact with the axial end surface of the coil end of at least one of the first coil and the second coil. Thus, it is possible to suppress an increase in axial dimension of the heat conduction member.

In the aforementioned aspect, the heat conduction member may include an extension portion, and at least a part of the extension portion extends along a circumferential direction of the coil end of one of the first coil and the second coil. Thus, heat may be effectively transferred between the first electric motor and the second electric motor.

In the aforementioned aspect, the electric motor system may further include a holding part configured to hold a cooling medium, and at least a part of the extension portion may be immersed in the cooling medium.

In the aforementioned aspect, the heat conduction member may include two extension portions corresponding to the first coil and the second coil respectively, at least a part of each of the two extension portions extends along a circumferential direction of the coil end of a corresponding one of the first coil and the second coil and the heat conduction member may further include a connection portion configured to connect the two extension portions. Thus, heat may be effectively transferred between the first electric motor and the second electric motor through the connection portion.

In the aforementioned aspect, the system may further include a holding part configured to hold a cooling medium, and at least a part of the two extension portions may be immersed in the cooling medium. Thus, it is possible to reduce the temperatures of the first electric motor and the second electric motor as a whole.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIGS. 1A and 1B are schematic configuration diagrams of an electric motor system according to a first embodiment of the invention;
FIGS. 2A and 2B are schematic configuration diagrams of an electric motor system according to a second embodiment of the invention;
FIGS. 3A and 3B are schematic configuration diagrams of an electric motor system according to a third embodiment of the invention;
FIGS. 4A and 4B are schematic configuration diagrams of an electric motor system according to a fourth embodiment of the invention;
FIGS. 5A and 5B are schematic configuration diagrams of an electric motor system according to a fifth embodiment of the invention;
FIGS. 6A and 6B are schematic configuration diagrams of an electric motor system according to a sixth embodiment of the invention;
FIG. 7 is a schematic configuration diagram of an electric motor system according to a seventh embodiment of the invention;
FIGS. 8A and 8B are schematic configuration diagrams of an electric motor system according to an eighth embodiment of the invention;
FIG. 9 is a schematic configuration diagram of an electric motor system according to a ninth embodiment of the invention; and
FIG. 10 is a schematic configuration diagram of an electric motor system according to a tenth embodiment of the invention.

### DETAILED DESCRIPTION OF EMBODIMENTS

Embodiments of the invention will be specifically described below with reference to the drawings. In the drawings, the same or corresponding components are designated by like reference numerals as appropriate, and the redundant description thereof will be omitted.

### First Embodiment

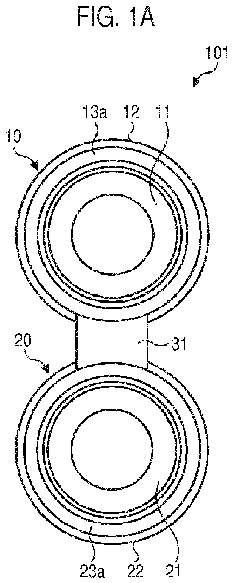

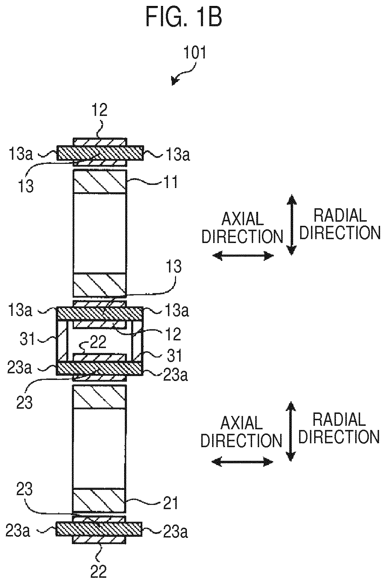

FIGS. 1A and 1B are schematic configuration diagrams of an electric motor system according to a first embodiment of the invention. FIG. 1A is a view of an electric motor system 101 as viewed in its axial direction. FIG. 1B is a sectional view of an electric motor system 101 taken along its axial direction.

The electric motor system 101 includes a first electric motor 10, a second electric motor 20 and two heat conduction members 31. In the present embodiment, the first electric motor 10 and the second electric motor 20 are of the same type, but they may be of different types.

The first electric motor 10 includes a first rotor 11 and a first stator 12. The first rotor 11 is cylindrical, and has a well-known configuration including a rotor core, a magnet, a field core and the like. A shaft is fixed to a central hole of the first rotor 11. The first stator 12 is a cylindrical member disposed radially outward of the first rotor 11 at a predetermined interval from the first rotor 11. The first stator 12 has a well-known configuration including a first coil 13 and the like provided on the stator core of the first stator 12. The first coil 13 is formed of a conductive wire in which an insulating coating is formed on a metal material having a low electrical resistance, such as copper or copper alloy. Annular coil ends 13a extending along the circumferential direction of the first stator 12 protrude on both axial sides of the first stator 12, respectively.

The second electric motor 20 includes a second rotor 21 and a second stator 22. The second rotor 21 is cylindrical and has a well-known configuration like the first rotor 11. A shaft is fixed to a central hole of the second rotor 21. The second stator 22 is a cylindrical member disposed radially outward of the second rotor 21 at a predetermined interval from the second rotor 21, and has a well-known configuration including a second coil 23 and the like as with the first stator 12. The second coil 23 is formed of a conductive wire in which an insulating coating is formed on a metal material having a low electric resistance. Annular coil ends 23a extending along the circumferential direction of the second stator 22 protrude on both axial sides of the second stator 22, respectively.

Each of the first electric motor 10 and the second electric motor 20 includes elements (not shown) such as a field yoke and a field coil for functioning as an electric motor. Further, each of the first electric motor 10 and the second electric motor 20 may be configured to function as a generator.

The first electric motor 10 and the second electric motor 20 are disposed apart from each other. In the present embodiment, the first electric motor 10 and the second electric motor 20 are arranged in parallel so that the rotation axis of the first rotor 11 and the rotation axis of the second rotor 21 are substantially parallel to each other.

The two heat conduction members 31 are plate-like members and are arranged to extend in the radial direction of the first electric motor 10 and the second electric motor 20. One heat conduction member 31 is disposed so as to extend between the first coil 13 and the second coil 23 by making contact with each of the coil end 13a and the coil end 23a on the left side in FIG. 1B. The other heat conduction member 31 is disposed so as to extend between the first coil 13 and the second coil 23 by making contact with each of the coil end 13a and the coil end 23a on the right side in FIG. 1B. Each heat conduction member 31 is in contact with the radial outer surfaces of the coil ends 13a and 23a. A side surface of each heat conduction member 31 making contact with the coil end 13a or the coil end 23a may have a shape that conforms to an outer circumferential surface of the coil end 13a or the coil end 23a so that an area of the side surface making contact with the coil end 13a or the coil end 23a increases.

Each heat conduction member 31 is made of a material having high heat conductivity. That is, each heat conduction member 31 is made of, for example, a metal, a heat conductive resin, a heat conductive elastomer or the like. The metal is, for example, copper or aluminum. The heat conductive resin is, for example, a resin obtained by mixing heat conductive filler with a polyimide resin, an epoxy resin, a polyester-based resin or the like. The heat conductive elastomer is, for example, an elastomer obtained by mixing heat conductive filler with a reactive oligomer as a base. When each heat conduction member 31 has electrical conductivity, an insulating paper may be interposed between each heat conduction member 31 and a coil making contact therewith or an insulating resin film is formed on a surface of each heat conduction member 31.

In the electric motor system 101, heat generated by operation of the first electric motor 10 and the second electric motor 20 moves from a high temperature side to a low temperature side of the first electric motor 10 and the second electric motor 20 at a low thermal resistance via the respective heat conduction members 31, and the respective coil ends 13a of the first coil 13 and the respective coil ends 23a of the second coil 23, which are usually high in thermal conductivity. Therefore, heat exchange is performed between the first electric motor 10 and the second electric motor 20 by the respective heat conduction members 31. As a result, it is possible to reduce a temperature difference between the first electric motor 10 and the second electric motor 20. In addition, since a temperature rise speed may be slowed down or a temperature drop may be made fast for the electric motor on the high temperature side, it is possible to lengthen an operation time of the electric motor on the high temperature side at a high load (that is, a high heat generation amount).

When the temperature difference between the first electric motor 10 and the second electric motor 20 can be reduced as described above, it is possible to lower the temperature of the motor that tends to have a high temperature. As a result, it is possible to alleviate constraints and loads on a design of a cooling system for cooling the electric motor system 101. Therefore, since a maximum cooling capacity of the cooling system can be set low or a configuration of the cooling system can be simplified or made smaller, it is possible to reduce a cost and a power consumption in the cooling system.

When the temperature difference between the two electric motors is large, an operating temperature range of the electric motor system as a whole may be limited by the electric motor having a higher or lower temperature. On the other hand, in the electric motor system 101, since the temperature difference between the first electric motor 10 and the second electric motor 20 may be reduced, an operating temperature range of the electric motor system 101 as a whole may be broadened. Further, when such an electric motor system 101 is used as a power source and mounted on a vehicle, the electric motor system 101 can suitably exhibit its capability in an appropriate operating temperature range, which suitably contributes to improvement of the power characteristics of the vehicle.

Further, in the electric motor system 101, since the heat can be dissipated from the high temperature side to the low temperature side of the first electric motor 10 and the second electric motor 20, a heat dissipation property is improved in the electric motor that tends to have a high temperature. Accordingly, constraints on thermal design for the electric motor that tend to have a high temperature is alleviated as compared with the conventional one. By alleviating the constraints on the thermal design, it is possible, for example, to design the electric motor in a smaller size. Generally, when the electric motor is made smaller, heat generation with respect to a volume of the electric motor will increase. However, since the heat thus generated can be effectively transferred to another electric motor according to the present embodiment, it is possible to suppress a temperature rise due to heat generation increased relative to the volume.

Further, since each heat conduction member 31 makes contact with the protruding coil end 13a and the protruding coil end 23a in the electric motor system 101, it is possible to simplify the configuration such as the shape.

Further, since each heat conduction member 31 makes contact with the radial outer surfaces of the coil ends 13a and 23a in the electric motor system 101, it is possible to reduce an axial protrusion amount of each heat conduction member 31. As a result, it is possible to suppress an increase in axial dimension of the electric motor system 101 as a whole.

### Second Embodiment

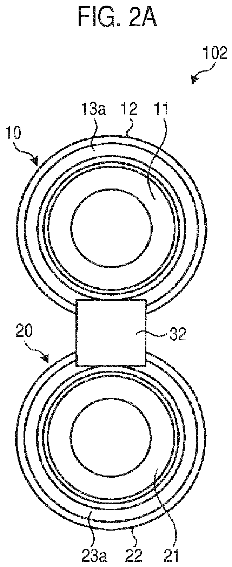

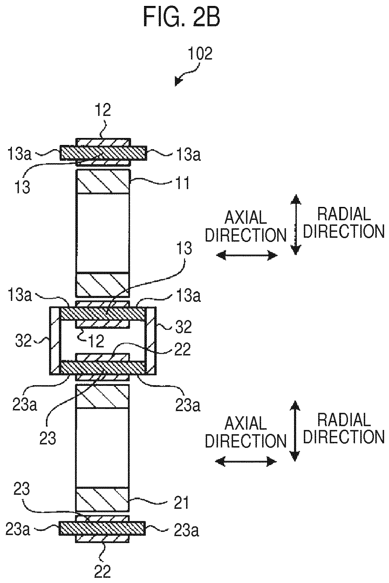

FIGS. 2A and 2B are schematic configuration diagrams of an electric motor system according to a second embodiment of the invention. FIG. 2A is a view of an electric motor system 102 as viewed in its axial direction. FIG. 2B is a sectional view of an electric motor system 102 taken along its axial direction.

The electric motor system 102 includes a first electric motor 10, a second electric motor 20 and two heat conduction members 32. In the present embodiment, as with the first embodiment, the first electric motor 10 and the second electric motor 20 are spaced apart from each other and are arranged in parallel so that the rotation axis of the first rotor 11 and the rotation axis of the second rotor 21 are substantially parallel to each other.

The two heat conduction members 32 are plate-like members and are arranged to extend in the radial direction of the first electric motor 10 and the second electric motor 20. One heat conduction member 32 is disposed so as to extend between the first coil 13 and the second coil 23 by making contact with each of the coil end 13a and the coil end 23a on the left side in FIG. 2B. The other heat conduction member 32 is disposed so as to extend between the first coil 13 and the second coil 23 by making contact with each of the coil end 13a and the coil end 23a on the right side in FIG. 2B. In addition, each heat conduction member 32 is in contact with the axial end surfaces of the coil ends 13a and 23a.

Each heat conduction member 32 is made of a material having high heat conductivity, like the heat conduction member 31 of the first embodiment. When each heat conduction member 32 has electrical conductivity, an insulating paper may be interposed between each heat conduction member 32 and the coil making contact therewith or an insulating resin film is formed on the surface of each heat conduction member 32.

Also in the electric motor system 102, the heat generated by the operation of the first electric motor 10 and the second electric motor 20 moves from the high temperature side to the low temperature side of the first electric motor 10 and the second electric motor 20 at a low thermal resistance via the respective heat conduction members 32, the respective coil ends 13a of the first coil 13 and the respective coil ends 23a of the second coil 23. As a result, it is possible to reduce the temperature difference between the first electric motor 10 and the second electric motor 20. In addition, a temperature rise speed may be made low or a temperature drop may be made fast for the electric motor on the high temperature side.

Therefore, as in the first embodiment, it is possible to reduce a cost and a power consumption of the cooling system for cooling the electric motor system 102. Further, the operating temperature range of the electric motor system 102 as a whole can be broadened, which suitably contributes to, for example, improvement of power characteristics of a vehicle equipped with the electric motor system 102 as a power source. Further, in the electric motor system 102, constraints on thermal design for the electric motor that tends to have a high temperature may be alleviated as compared with the conventional one, thereby making it possible, for example, to design the electric motor in a smaller size.

### Third Embodiment

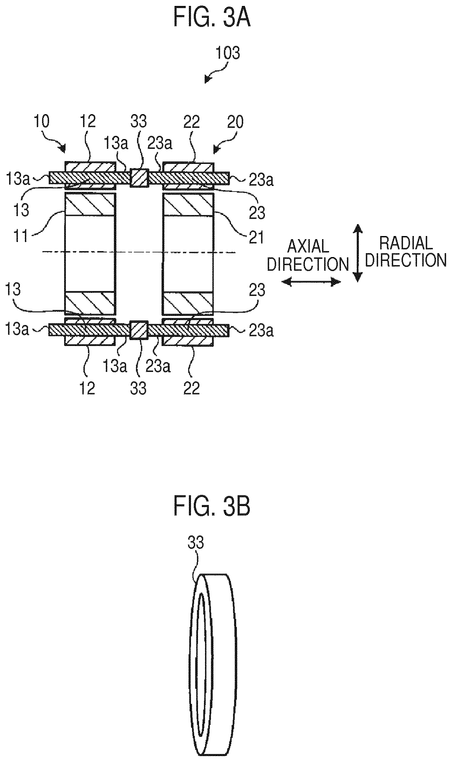

FIGS. 3A and 3B are schematic configuration diagrams of an electric motor system according to a third embodiment of the invention. FIG. 3A is a sectional view of an electric motor system 103 taken along its axial direction. FIG. 3B is a perspective view of a heat conduction member 33.

The electric motor system 103 includes a first electric motor 10, a second electric motor 20 and a heat conduction member 33. In the present embodiment, the first electric motor 10 and the second electric motor 20 are spaced apart from each other and are arranged in series so that the rotation axis of the first rotor 11 and the rotation axis of the second rotor 21 substantially coincide with each other.

The heat conduction member 33 is a cylindrical member and is disposed between the first electric motor 10 and the second electric motor 20 so as to extend in the axial direction. The heat conduction member 33 is disposed so as to extend between the first coil 13 and the second coil 23 by making contact with each of the coil end 13a and the coil end 23a between the first electric motor 10 and the second electric motor 20. The heat conduction member 33 is in contact with the axial end surfaces of the coil ends 13a and 23a.

The heat conduction member 33 is made of a material having high heat conductivity, like the heat conduction members 31 of the first embodiment. When each heat conduction member 33 has electrical conductivity, an insulating paper may be interposed between each heat conduction member 33 and the coil making contact therewith or an insulating resin film is formed on a surface of each heat conduction member 33.

Also in the electric motor system 103, the heat generated by the operation of the first electric motor 10 and the second electric motor 20 moves from the high temperature side to the low temperature side of the first electric motor 10 and the second electric motor 20 at a low thermal resistance via the heat conduction member 33, the coil end 13a of the first coil 13 and the coil end 23a of the second coil 23. As a result, it is possible to reduce the temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 103. Further, an operating temperature range of the electric motor system 103 as a whole can be broadened, which suitably contributes to, for example, improvement of power characteristics of a vehicle equipped with the electric motor system 103 as a power source. In addition, in the electric motor system 103, constraints on the thermal design for the electric motor that tends to have a high temperature may be alleviated as compared with the conventional one, thereby making it possible, for example, to design the electric motor in a smaller size.

Further, since the heat conduction member 33 is in contact with the axial end surfaces of the coil ends 13a and 23a in the electric motor system 103, it is possible to suppress an increase in axial dimension of the heat conduction member 33.

### Fourth Embodiment

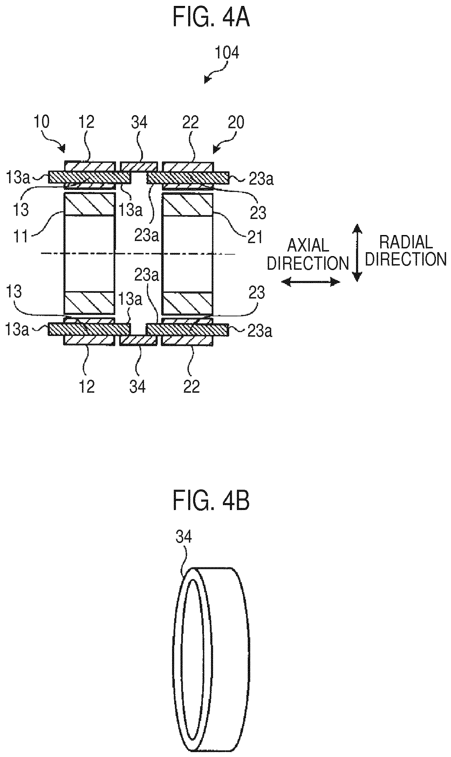

FIGS. 4A and 4B are schematic configuration diagrams of an electric motor system according to a fourth embodiment of the invention. FIG. 4A is a sectional view of an electric motor system 104 taken along its axial direction. FIG. 4B is a perspective view of a heat conduction member 34.

The electric motor system 104 includes a first electric motor 10, a second electric motor 20 and a heat conduction member 34. In the present embodiment, like the third embodiment, the first electric motor 10 and the second electric motor 20 are spaced apart from each other and are arranged in series so that a rotation axis of a first rotor 11 and a rotation axis of a second rotor 21 substantially coincide with each other.

The heat conduction member 34 is a cylindrical member and is disposed between the first electric motor 10 and the second electric motor 20 so as to extend in the axial direction. The heat conduction member 34 is disposed so as to extend between the first coil 13 and the second coil 23 by making contact with each of the coil end 13a and the coil end 23a between the first electric motor 10 and the second electric motor 20. The heat conduction member 34 is in contact with radial outer surfaces of the coil ends 13a and 23a.

The heat conduction member 34 is made of a material having high heat conductivity, like the heat conduction members 31 of the first embodiment. When each heat conduction member 34 has electrical conductivity, an insulating paper may be interposed between each heat conduction member 34 and a coil making contact therewith or an insulating resin film is formed on a surface of each heat conduction member 34.

Also in the electric motor system 104, heat generated by the operation of the first electric motor 10 and the second electric motor 20 moves from the high temperature side to the low temperature side of the first electric motor 10 and the second electric motor 20 at a low thermal resistance via the heat conduction member 34, the coil end 13a of the first coil 13 and the coil end 23a of the second coil 23. As a result, it is possible to reduce the temperature difference between the first electric motor 10 and the second electric motor 20. In addition, the temperature rise speed may be made low or the temperature drop may be made fast for the electric motor on the high temperature side.

Therefore, as in other embodiments, it is possible to reduce a cost and a power consumption of the cooling system for cooling the electric motor system 104. Further, an operating temperature range of the electric motor system 104 as a whole may be broadened, which suitably contributes to, for example, improvement of power characteristics of a vehicle equipped with the electric motor system 104 as a power source. In addition, in the electric motor system 104, constraints on thermal design for the electric motor that tends to have a high temperature is alleviated as compared with the conventional one, thereby making it possible, for example, to design the electric motor in a smaller size.

Further, since the heat conduction member 34 is in contact with the radial outer surfaces of the coil ends 13a and 23a in the electric motor system 104, it is possible to suppress an increase in axial dimension of the electric motor system 104 as a whole.

In the electric motor system 104, the heat conduction member 34 is in contact with the radial outer surfaces of the coil ends 13a and 23a. However, instead of the heat conduction member 34, it may be possible to adopt a cylindrical heat conduction member disposed so as to make contact with radial inner surfaces of the coil ends 13a and 23a.

### Fifth Embodiment

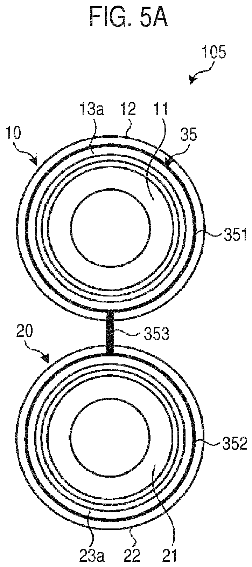

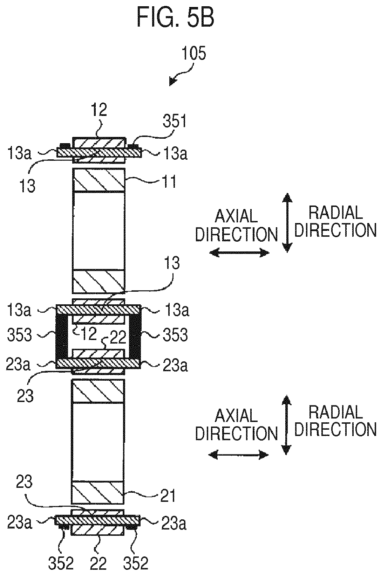

FIGS. 5A and 5B are schematic configuration diagrams of an electric motor system according to a fifth embodiment of the invention. FIG. 5A is a view of an electric motor system 105 as viewed in its axial direction. FIG. 5B is a sectional view of an electric motor system 105 taken along its axial direction.

The electric motor system 105 includes a first electric motor 10, a second electric motor 20 and two heat conduction members 35. In the present embodiment, like the first embodiment, the first electric motor 10 and the second electric motor 20 are spaced apart from each other and are arranged in parallel so that the rotation axis of the first rotor 11 and the rotation axis of the second rotor 21 are substantially parallel to each other.

The two heat conduction members 35 are tubular members. Each heat conduction member 35 includes extension portions 351 and 352 and a connection portion 353. The extension portion 351 extends along a circumferential direction on a radial side surface of one coil end 13a of the first coil 13 and has an annular shape in the present embodiment. The extension portion 352 extends along a circumferential direction on a radial side surface of one coil end 23a of the second coil 23 and has an annular shape in the present embodiment. The connection portion 353 is a portion that connects the extension portion 351 and the extension portion 352. A shape of the connection portion 353 is not particularly limited, but in the present embodiment, the shape of the connection portion 353 is a linear shape so that the connection portion 353 connects the extension portion 351 and the extension portion 352 substantially at the shortest distance.

One heat conduction member 35 is disposed so as to extend between the first coil 13 and the second coil 23 as the extension portion 351 makes contact with the coil end 13a and the extension portion 352 makes contact with the coil end 23a on the left side in FIG. 5B. The other heat conduction member 35 is disposed so as to extend between the first coil 13 and the second coil 23 as the extension portion 351 makes contact with the coil end 13a and the extension portion 352 makes contact with the coil end 23a on the right side in FIG. 5B.

In the present embodiment, each heat conduction member 35 is formed of a heat pipe. The heat pipe is, for example, a member in which a working fluid is filled in a cavity inside a tubular body so that heat is transported from one place to another by evaporation and condensation of the working fluid. When the tubular body of the heat pipe has electrical conductivity, an insulating paper may be interposed between the tubular body and a coil making contact therewith or an insulating resin film is formed on a surface of the tubular body.

Also in the electric motor system 105, heat generated by the operation of the first electric motor 10 and the second electric motor 20 moves from the high temperature side to the low temperature side of the first electric motor 10 and the second electric motor 20 at a low thermal resistance via each heat conduction member 35, each coil end 13a of the first coil 13 and each coil end 23a of the second coil 23. As a result, it is possible to reduce temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 105. Further, an operating temperature range of the electric motor system 105 as a whole may be broadened, which suitably contributes to, for example, improvement of power characteristics of a vehicle equipped with the electric motor system 105 as a power source. In addition, in the electric motor system 105, constraints on thermal design for the electric motor that tends to have a high temperature may be alleviated as compared with the conventional one, thereby making it possible, for example, to design the electric motor in a smaller size.

Further, since each heat conduction member 35 is in contact with the radial outer surfaces of the coil ends 13a and 23a in the electric motor system 105, it is possible to suppress an increase in axial dimension of the electric motor system 105.

Further, since the extension portions 351 and 352 of each heat conduction member 35 respectively extend along circumferential directions of the coil ends 13a and 23a in the electric motor system 105, it is possible to increase the contact area between the heat conduction member 35 and the coil ends 13a and 23a. As a result, heat can be effectively transferred between the first electric motor 10 and the second electric motor 20.

### Sixth Embodiment

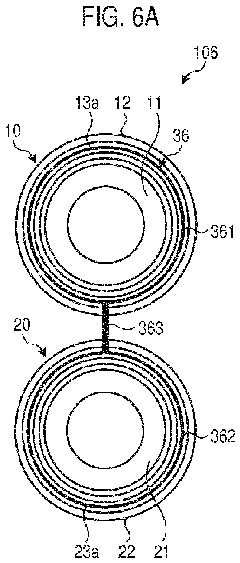

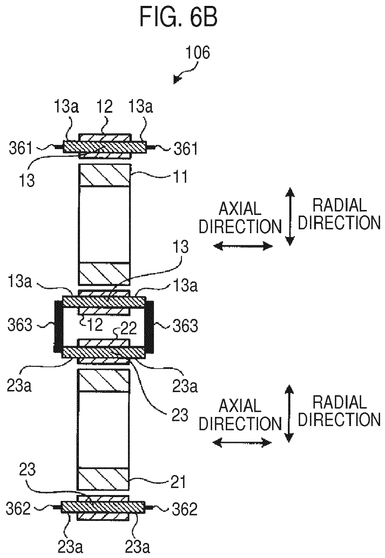

FIGS. 6A and 6B are schematic configuration diagrams of an electric motor system according to a sixth embodiment of the invention. FIG. 6A is a view of an electric motor system 106 as viewed in its axial direction. FIG. 6B is a sectional view of an electric motor system 106 taken along its axial direction.

The electric motor system 106 includes a first electric motor 10, a second electric motor 20 and two heat conduction members 36. Also in the present embodiment, the first electric motor 10 and the second electric motor 20 are spaced apart from each other and are arranged in parallel so that a rotation axis of a first rotor 11 and a rotation axis of a second rotor 21 are substantially parallel to each other.

The two heat conduction members 36 are tubular members. Each heat conduction member 36 includes extension portions 361 and 362 and a connection portion 363. The extension portion 361 extends along a circumferential direction on an axial end surface of one coil end 13a of the first coil 13 and has an annular shape in the present embodiment. The extension portion 362 extends along a circumferential direction on an axial end surface of one coil end 23a of the second coil 23 and has an annular shape in the present embodiment. The connection portion 363 is a portion that connects the extension portion 361 and the extension portion 362. A shape of the connection portion 363 is not particularly limited. In the present embodiment, the shape of the connection portion 363 is a linear shape so that the connection portion 363 connects the extension portion 361 and the extension portion 362 substantially at the shortest distance.

One heat conduction member 36 is disposed so as to extend between the first coil 13 and the second coil 23 as the extension portion 361 makes contact with the coil end 13a and the extension portion 362 makes contact with the coil end 23a on the left side in FIG. 6B. The other heat conduction member 36 is disposed so as to extend between the first coil 13 and the second coil 23 as the extension portion 361 makes contact with the coil end 13a and the extension portion 362 makes contact with the coil end 23a on the right side in FIG. 6B.

In the present embodiment, like the fifth embodiment, each heat conduction member 36 is formed of a heat pipe. When the tubular body of the heat pipe has electrical conductivity, an insulating paper may be interposed between the tubular body and a coil making contact therewith or an insulating resin film is formed on a surface of the tubular body.

Also in the electric motor system 106, heat generated by the operation of the first electric motor 10 and the second electric motor 20 moves from the high temperature side to the low temperature side of the first electric motor 10 and the second electric motor 20 at a low thermal resistance via each heat conduction member 36, each coil end 13a of the first coil 13 and each coil end 23a of the second coil 23. As a result, it is possible to reduce the temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 106. Further, an operating temperature range of the electric motor system 106 as a whole can be broadened, which suitably contributes to, for example, improvement of power characteristics of a vehicle equipped with the electric motor system 106 as a power source. In addition, in the electric motor system 106, constraints on thermal design for the electric motor that tends to have a high temperature may be alleviated as compared with the conventional one, thereby making it possible, for example, to design the electric motor in a smaller size.

Further, since the extension portions 361 and 362 of each heat conduction member 36 respectively extend along circumferential directions of the coil ends 13a and 23a in the electric motor system 106, it is possible to increase the contact area between the heat conduction members 36 and the coil ends 13a and 23a. As a result, heat can be effectively transferred between the first electric motor 10 and the second electric motor 20.

### Seventh Embodiment

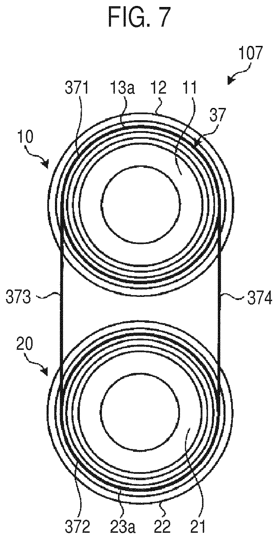

FIG. 7 is a schematic configuration diagram of an electric motor system according to a seventh embodiment of the invention, in which an electric motor system 107 is viewed in its axial direction thereof. The electric motor system 107 includes a first electric motor 10, a second electric motor 20 and two heat conduction members 37. Also in the present embodiment, the first electric motor 10 and the second electric motor 20 are spaced apart from each other and are arranged in parallel so that the rotation axis of the first rotor 11 and the rotation axis of the second rotor 21 are substantially parallel to each other.

In FIG. 7, one of the two heat conduction members 37 is shown. The other heat conduction member 37 is disposed on the back side of the first electric motor 10 and the second electric motor 20 and has the same configuration as the illustrated heat conduction member 37. Specifically, the two heat conduction members 37 are tubular members. Each heat conduction member 37 includes extension portions 371 and 372 and connection portions 373 and 374. The extension portion 371 extends along a circumferential direction on an axial end surface of one coil end 13a of a first coil 13 and has an annular shape in the present embodiment. The extension portion 372 extends along a circumferential direction on an axial end surface of one coil end 23a of a second coil 23 and has an annular shape in the present embodiment. The connection portions 373 and 374 are portions that connect the extension portion 361 and the extension portion 362. The shape of the connection portions 373 and 374 is not particularly limited. In the present embodiment, the connection portion 373 has a linear shape so that the connection portion 373 connects the end of the extension portion 371 and the end of the extension portion 372 on the left side in FIG. 7. The connection portion 374 has a linear shape that connects the end of the extension portion 371 and the end of the extension portion 372 on the right side in FIG. 7.

As in the sixth embodiment, each heat conduction member 37 is disposed so as to extend between the first coil 13 and the second coil 23 as the extension portion 371 makes contact with the coil end 13a and the extension portion 372 makes contact with the coil end 23a.

In the present embodiment, like the sixth embodiment, each heat conduction member 37 is formed of a heat pipe. When a tubular body of the heat pipe has electrical conductivity, an insulating paper may be interposed between the tubular body and a coil making contact therewith or an insulating resin film is formed on a surface of the tubular body.

Also in the electric motor system 107, heat generated by the operation of the first electric motor 10 and the second electric motor 20 moves from the high temperature side to the low temperature side of the first electric motor 10 and the second electric motor 20 at a low thermal resistance via each heat conduction member 37, each coil end 13a of the first coil 13 and each coil end 23a of the second coil 23. As a result, it is possible to reduce a temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 107. Further, an operating temperature range of the electric motor system 107 as a whole can be broadened, which suitably contributes to, for example, improvement of power characteristics of a vehicle equipped with the electric motor system 107 as a power source. In addition, in the electric motor system 107, constraints on thermal design for the electric motor that tends to have a high temperature may be alleviated as compared with the conventional one, thereby making it possible, for example, to design the electric motor in a smaller size.

Furthermore, in the electric motor system 107, like the sixth embodiment, it is possible to increase the contract area between the heat conduction member 37 and the coil ends 13a and 23a and to reduce a temperature difference in circumferential directions of the coil ends 13a and 23a. Further, since the extension portions 371 and 372 are connected by the two connection portions 373 and 374 in the electric motor system 107, heat can be effectively transferred between the first electric motor 10 and the second electric motor 20.

### Eighth Embodiment

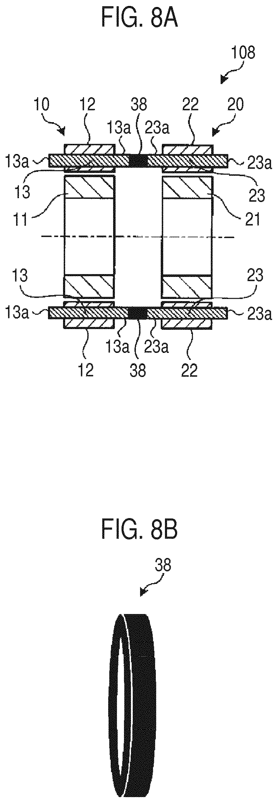

FIGS. 8A and 8B are schematic configuration diagrams of an electric motor system according to an eighth embodiment of the invention. FIG. 8A is a sectional view of an electric motor system 108 taken along its axial direction. FIG. 8B is a perspective view of a heat conduction member 38.

The electric motor system 108 includes a first electric motor 10, a second electric motor 20 and a heat conduction member 38. In the present embodiment, the first electric motor 10 and the second electric motor 20 are spaced apart from each other and are arranged in series so that a rotation axis of a first rotor 11 and a rotation axis of a second rotor 21 substantially coincide with each other.

The heat conduction member 38 is a cylindrical member and is disposed between the first electric motor 10 and the second electric motor 20 so as to extend in the axial direction. The heat conduction member 38 is disposed so as to extend between the first coil 13 and the second coil 23 by making contact with each of the coil end 13a and the coil end 23a between the first electric motor 10 and the second electric motor 20. The heat conduction member 38 is in contact with the axial end surfaces of the coil ends 13a and 23a.

As in the fifth embodiment, the heat conduction member 38 is formed of a heat pipe. When a tubular body of the heat pipe has electrical conductivity, an insulating paper may be interposed between the tubular body and a coil making contact therewith or an insulating resin film is formed on a surface of the tubular body.

Also in the electric motor system 108, heat generated by the operation of the first electric motor 10 and the second electric motor 20 moves from the high temperature side to the low temperature side of the first electric motor 10 and the second electric motor 20 at a low thermal resistance via the heat conduction member 38, the coil end 13a of the first coil 13 and the coil end 23a of the second coil 23. As a result, it is possible to reduce a temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 108. Further, an operating temperature range of the electric motor system 108 as a whole may be broadened, which suitably contributes to, for example, improvement of power characteristics of a vehicle equipped with the electric motor system 108 as a power source. In addition, in the electric motor system 108, constraints on thermal design for the electric motor that tends to have a high temperature may be alleviated as compared with the conventional one, thereby making it possible, for example, to design the electric motor in a smaller size.

Further, since the heat conduction member 38 is in contact with the axial end surfaces of the coil ends 13a and 23a in the electric motor system 108, it is possible to suppress an increase in radial dimension of the heat conduction member 38.

### Ninth Embodiment

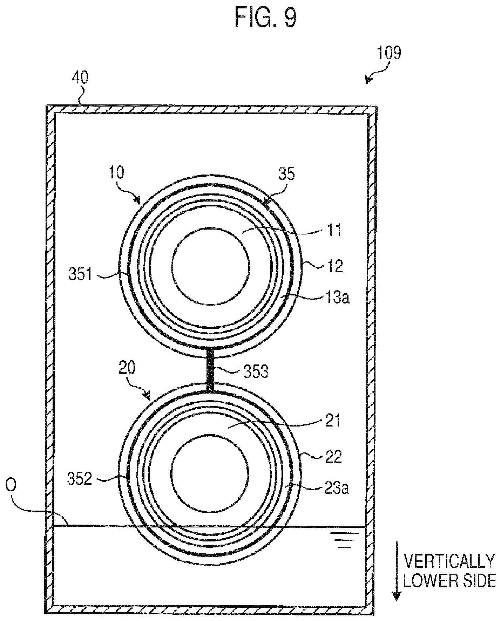

FIG. 9 is a schematic configuration diagram of an electric motor system according to a ninth embodiment of the invention. The electric motor system 109 includes a first electric motor 10, a second electric motor 20, two heat conduction members 35 and a case 40. Also in the present embodiment, the first electric motor 10 and the second electric motor 20 are spaced apart from each other and are arranged in parallel so that a rotation axis of a first rotor 11 and a rotation axis of a second rotor 21 are substantially parallel to each other.

The two heat conduction members 35 are the same as those of the fifth embodiment, and each of heat conduction member 35 includes extension portions 351 and 352 and a connection portion 353. In FIG. 9, one of the two heat conduction members 35 is shown. The other heat conduction member 35 is disposed on back sides of the first electric motor 10 and the second electric motor 20 and has the same configuration as the illustrated heat conduction member 35.

The case 40 accommodates the first electric motor 10, the second electric motor 20 and the two heat conduction members 35. A bottom portion of the case 40 located vertically downward serves as a holding part that holds cooling oil O as a cooling medium. The cooling oil O is, for example, lubricating oil that flows inside the case 40 to lubricate the first electric motor 10 and the second electric motor 20. A certain amount of the cooling oil O is stored in the bottom portion of the case 40.

The electric motor system 109 is configured such that at least a part of the extension portion 352 located on the vertically lower side in the heat conduction member 35 is immersed in the cooling oil O. In order to configure the electric motor system 109 as described above, a relationship between a storage amount the cooling oil O and a shape of the extension portion 352 may be set such that the extension portion 352 extends to a level that is vertically lower than a liquid surface of the stored cooling oil O.

Also in the electric motor system 109, heat generated by the operation of the first electric motor 10 and the second electric motor 20 moves from the high temperature side to the low temperature side of the first electric motor 10 and the second electric motor 20 at a low thermal resistance via each heat conduction member 35, each coil end 13a of the first coil 13 and each coil end 23a of the second coil 23. As a result, it is possible to reduce a temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 109. Further, an operating temperature range of the electric motor system 109 as a whole may be broadened, which suitably contributes to, for example, improvement of power characteristics of a vehicle equipped with the electric motor system 109 as a power source. In addition, in the electric motor system 109, constraints on thermal design for the electric motor that tends to have a high temperature may be alleviated as compared with the conventional one, thereby making it possible, for example, to design the electric motor in a smaller size.

Further, since heat generated by the operation of the first electric motor 10 and the second electric motor 20 may be dissipated to the cooling oil O via the extension portion 352 in the electric motor system 109, it is possible to reduce the temperature of the first electric motor 10 and the second electric motor 20 as a whole. As a result, it is possible to further reduce the cost and the power consumption of the cooling system, further enlarge the operating temperature range of the electric motor system 109 as a whole, significantly alleviate the constraints on the thermal design of the electric motor that tends to have a high temperature, and further reduce the size of the electric motor, and the like. Tenth Embodiment

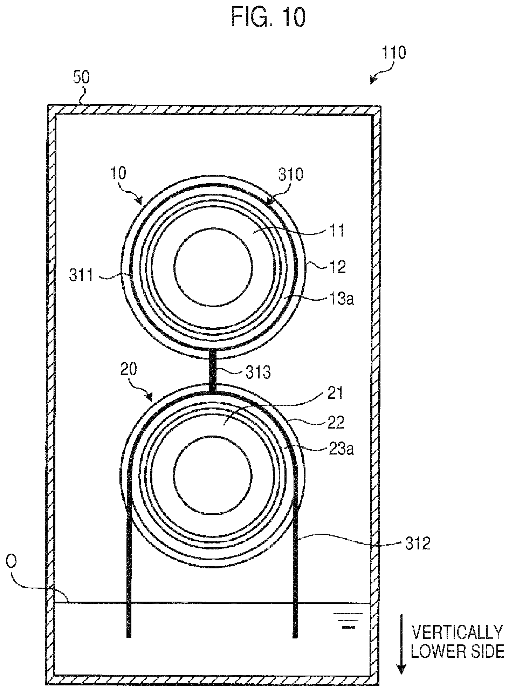

FIG. 10 is a schematic configuration diagram of an electric motor system according to a tenth embodiment of the invention. The electric motor system 110 includes a first electric motor 10, a second electric motor 20, two heat conduction members 310 and a case 50. Also in the present embodiment, the first electric motor 10 and the second electric motor 20 are spaced apart from each other and are arranged in parallel so that a rotation axis of a first rotor 11 and a rotation axis of a second rotor 21 are substantially parallel to each other.

The two heat conduction members 310 are tubular members. In FIG. 10, one of the two heat conduction members 310 is shown. The other heat conduction member 310 is disposed on back sides of the first electric motor 10 and the second electric motor 20 and has the same configuration as that of the illustrated heat conduction member 310. Each heat conduction member 310 includes extension portions 311 and 312 and a connection portion 313. The extension portion 311 extends along a circumferential direction on a radial side surface of one coil end 13a of the first coil 13 and has an annular shape in the present embodiment. The extension portion 312 includes a portion extending along a circumferential direction on a radial side surface of one coil end 23a of the second coil 23 so that the portion is formed in a semicircular arc shape. The extension portion 312 further includes portions linearly extending from respective ends of the semicircular arc shaped portion. The connection portion 313 is a portion that connects the extension portion 311 and the extension portion 312. A shape of the connection portion 313 is not particularly limited, but in the present embodiment, the shape of the connection portion 313 is a linear shape such that the connection portion 313 connects the extension portion 311 and the extension portion 312 substantially at the shortest distance.

In the present embodiment, each heat conduction member 310 is formed of a heat pipe. When a tubular body of the heat pipe has electrical conductivity, an insulating paper may be interposed between the tubular body and a coil making contact therewith or an insulating resin film is formed on a surface of the tubular body.

The case 50 accommodates the first electric motor 10, the second electric motor 20 and the two heat conduction members 310. A bottom portion of the case 50 located vertically downward serves as a holding part that holds cooling oil O as a cooling medium. The cooling oil O is, for example, lubricating oil that flows inside the case 50 to lubricate the first electric motor 10 and the second electric motor 20. A certain amount of the cooling oil O is stored in a bottom portion of the case 50.

The electric motor system 110 is configured such that at least a part of the extension portion 312 located on the vertically lower side in the heat conduction member 310 is immersed in the cooling oil O. In order to configure the electric motor system 110 as described above, a relationship between a storage amount of the cooling oil O and the shape of the extension portion 312 may be set such that the extension portion 312 extends to a level that is vertically lower than a liquid surface of the stored cooling oil O.

Also in the electric motor system 110, heat generated by the operation of the first electric motor 10 and the second electric motor 20 moves from the high temperature side to the low temperature side of the first electric motor 10 and the second electric motor 20 at a low thermal resistance via each heat conduction member 310, each coil end 13a of the first coil 13 and each coil end 23a of the second coil 23. As a result, it is possible to reduce a temperature difference between the first electric motor 10 and the second electric motor 20. In addition, a temperature rise speed may be made low or a temperature drop may be made fast for the electric motor on the high temperature side.

Therefore, as in other embodiments, it is possible to reduce a cost and a power consumption of the cooling system for cooling the electric motor system 110. Further, an operating temperature range of the electric motor system 110 as a whole may be broadened, which suitably contributes to, for example, improvement of power characteristics of a vehicle equipped with the electric motor system 110 as a power source. In addition, in the electric motor system 110, constraints on thermal design for the electric motor that tends to have a high temperature may be alleviated as compared with the conventional one, thereby making it possible, for example, to design the electric motor in a smaller size.

Further, since the heat generated by the operation of the first electric motor 10 and the second electric motor 20 may be dissipated to the cooling oil O via the extension portion 312 in the electric motor system 110, it is possible to reduce the temperature of the first electric motor 10 and the second electric motor 20 as a whole. As a result, it is possible to further reduce the cost and the power consumption of the cooling system, further enlarge the operating temperature range of the electric motor system 110 as a whole, significantly alleviate the constraints on the thermal design of the electric motor that tends to have a high temperature, further reduce the size of the electric motor, and the like. In addition, since a length of the extension portion 312 may be adjusted, it is possible, for example, to increase a degree of freedom of arranging the first electric motor 10 and the second electric motor 20 in the case 50 while realizing the immersion in the stored cooling oil O.

In the above-described embodiments, since the heat conduction member is in contact with the coil end 13a protruding in the first coil 13 and the coil end 23a protruding in the second coil 23, the heat conduction member can be made simple in configuration and can be disposed so as to extend between the first coil 13 and the second coil 23. However, the invention is not limited thereto. The heat conduction member may be in contact with the first coil 13 and the second coil 23 at the portions other than the coil ends.

Further, in the fifth to seventh embodiments and the like, the two extension portions of each heat conduction member have an annular shape. However, the shape of the extension portions is not limited thereto as long as the extension portions extend along circumferential directions of the coil ends 13a and 23a respectively. For example, the extension portions may have an arc shape in which a part of the annular ring is open. In addition, for example, one of the two extension portions of the heat conduction member may have an annular shape, and the other may have an arc shape. Both of the two extension portions may have an arc shape.

Further, in the fifth to seventh embodiments, the heat conduction member includes the extension portion for each of the first coil 13 and the second coil 23. However, the heat conduction member may include an extension portion for one of the first coil 13 and the second coil 14. In addition, the heat conduction member may not include the connection portion, and the two extension portions may be directly connected to each other.

Further, the invention is not limited by the above-described embodiments. Configurations obtained by appropriately combining the above-described components are also included in the invention. For example, the first embodiment and the second embodiment may be combined or the third embodiment and the fourth embodiment may be combined so that the heat conduction member makes contact with the radial outer surface of one coil end 13a and the axial end surface of the other coil end 23a. Further, in the configuration of the fifth embodiment, two connection portions such as the connection portions 373 and 374 of the seventh embodiment may be provided in place of the connection portion 353 so as to transfer heat more effectively. Moreover, in the configuration of the first embodiment, one or both of the two heat conduction members 31 may be replaced with the heat conduction member as shown in the second, fifth to seventh and tenth embodiments.

Moreover, each of the electric motor systems according to the above-described embodiments includes two electric motors. However, the invention is applicable to an electric motor system including three or more electric motors. Further, the electric motor system according to the invention can be mounted on a vehicle, such as a hybrid vehicle or an electric vehicle. However, the application thereof is not limited to the vehicle, and the electric motor system may be applied to various apparatuses using a plurality of electric motors.

Further, additional effects and modifications may be easily derived by those skilled in the art. Thus, broader aspects of the invention are not limited to the above-described embodiments but may be modified in many different ways.

## Claims

1. An electric motor system comprising:
a first electric motor (10) including a first rotor (11), a first stator (12) and a first coil (13) provided in the first stator (12);
a second electric motor (20) including a second rotor (21), a second stator (22) and a second coil (23) provided in the second stator (22), the second electric motor (20) spaced apart from the first electric motor (10); and
a heat conduction member (31; 32; 33; 34; 35; 36; 37; 38; 310) disposed so as to extend between the first coil (13) of the first electric motor (10) and the second coil (23) of the second electric motor (20).

2. The electric motor system according to claim 1, wherein the heat conduction member (31; 32; 33; 34; 35; 36; 37; 38; 310) is in contact with a coil end of the first coil (13) and a coil end of the second coil (23).

3. The electric motor system according to claim 2, wherein the first electric motor (10) and the second electric motor (20) are arranged in parallel, and the heat conduction member (31; 32; 35; 36; 37; 310) is in contact with a radial side surface of the coil end of at least one of the first coil (13) and the second coil (23).

4. The electric motor system according to claim 2 or 3, wherein the first electric motor (10) and the second electric motor (20) are arranged in parallel, and the heat conduction member (32; 36; 37) is in contact with an axial end surface of the coil end of at least one of the first coil (13) and the second coil (23).

5. The electric motor system according to claim 2, wherein the first electric motor (10) and the second electric motor (20) are arranged in series, and the heat conduction member (34) is in contact with a radial side surface of the coil end of at least one of the first coil (13) and the second coil (23).

6. The electric motor system according to claim 2 or 5, wherein the first electric motor (10) and the second electric motor (20) are arranged in series, and the heat conduction member (33; 38) is in contact with an axial end surface of the coil end of at least one of the first coil (13) and the second coil (23).

7. The electric motor system according to any one of claims 2 to 6, wherein the heat conduction member (33; 34; 35; 36; 37; 38; 310) includes an extension portion, and at least a part of the extension portion extends along a circumferential direction of the coil end of one of the first coil (13) and the second coil (23).

8. The electric motor system according to claim 7, further comprising a holding part (40; 50) configured to hold a cooling medium,
wherein at least a part of the extension portion is immersed in the cooling medium.

9. The electric motor system according to any one of claims 2 to 6, wherein the heat conduction member (35; 36; 37; 310) includes two extension portions corresponding to the first coil (13) and the second coil (23) respectively,
at least a part of each of the two extension portions extends along a circumferential direction of the coil end of a corresponding one of the first coil (13) and the second coil (23), and
the heat conduction member (35; 36; 37; 310) further includes a connection portion configured to connect the two extension portions.

10. The electric motor system according to claim 9, further comprising a holding part (40; 50) configured to hold a cooling medium,
wherein at least a part of the two extension portions is immersed in the cooling medium.
